# EUROPÄISCHE PATENTSCHRIFT

(11) **EP 2 141 211 B1**
(45) Veröffentlichungstag und Bekanntmachung des Hinweises auf die Patenterteilung: **08.06.2016**
(21) Anmeldenummer: 09163293.5
(22) Anmeldetag: 19.06.2009
(51) Int. Cl.: C09J 7/02, B32B 5/18, B32B 7/06, B32B 7/12, B32B 25/04, B32B 27/06, B32B 27/16, B32B 27/30

(54) **Doppelseitige Schaumstoffklebebänder zur Verklebung von elektronischen Bauteilen**
Double-sided foam adhesive tape for adhering electronic components
Bandes adhésives double face avec support en mousse pour le collage de composants électroniques

(30) Priorität: 04.07.2008 DE 102008031356
(43) Veröffentlichungstag der Anmeldung: 06.01.2010
(73) Patentinhaber: tesa SE, 22848 Norderstedt (DE)
(72) Erfinder: Kluge-Paletta, Werner, 21244 Buchholz (DE); Krüger, Sandra, 22523 Hamburg (DE)

(56) Entgegenhaltungen:
- JP-A- 2002 350 612
- US-A1- 2008 160 242

## Beschreibung

Die Erfindung betrifft schwarze Klebebänder insbesondere zur Anwendung für die Verklebung elektronischer Bauteile.

Haftklebebänder sind im Zeitalter der Industrialisierung weitverbreitete Verarbeitungshilfsmittel. Insbesondere für den Einsatz in der Elektronik- und Computerindustrie werden an Haftklebebänder sehr hohe Anforderungen gestellt. Neben einem geringen Ausgasungsverhalten sollten die Haftklebebänder in einem weiten Temperaturbereich einsetzbar sein und bestimmte optische Eigenschaften erfüllen.
Ein Einsatzgebiet ist die Verklebung von LCDs (Flüssigkristall-Datenanzeigen, Liquid-Crystal-Displays), die beispielsweise für Computer, Fernsehgeräte, Laptops, PDA's (Personal Digital Assistants), Mobiltelefonen, Digitalkameras etc. benötigt werden.
In diesem Bereich werden rund um LC-Displays sehr häufig sogenannte Spacer Tapes eingesetzt, die lichtabsorbierende Funktionen besitzen. Zum einen soll vermieden werden, dass Licht von außen in das Display einfällt. Zum anderen soll von der Lichtquelle des LC-Displays ausgehend kein Licht nach außen drängen.
Die US 2008/160242 A offenbart ein doppelseitiges Klebeband zur Verklebung von Flüssigkristallbildschirmen in Mobiltelefonen. Das Klebeband besteht aus zwei äußeren Klebemassenschichten, einer Trägerschicht aus zum Beispiel einem Polyacrylatschaum und einer an der geschäumten Trägerschicht anliegenden Trägerschicht aus zum Beispiel einer PET-Folie. Es ist beschrieben, dass es für ausgewählte Schichten vorteilhaft sein kann, Farbpigmente beizumischen, ohne hierbei aber auf deren lichtabsorbierende Wirkung einzugehen.

Zur Zeit besteht ein Trend in dieser Industrie zu leichteren Bauteilen mit höherer Auflösung und zu immer größeren Flüssigkristall-Displays (LCDs). Mit diesem Trend sind auch stärkere und immer effizientere Lichtquellen verbunden, die wiederum höhere Anforderungen an die lichtabsorbierenden Eigenschaften des Klebebandes stellen.

Generell werden für diese Anwendung bevorzugt schwarze doppelseitige Klebebänder eingesetzt. Zur Herstellung dieser Klebebänder und der dafür erforderlichen Träger existieren viele Konzepte.

Eines der Konzepte zur Herstellung von schwarzen doppelseitigen Haftklebebändern besteht in der Einfärbung des Trägermaterials. In der Elektronik-Industrie werden sehr bevorzugt doppelseitige Haftklebebänder mit PET-Trägern eingesetzt, da diese sich sehr gut stanzen lassen. Die PET-Träger werden mit Ruß oder schwarzen Farbpigmenten eingefärbt, um eine Absorption des Lichtes zu erreichen.
Der Nachteil dieser Klebebänder ist die geringe Absorption des Lichtes. In sehr dünnen Trägerschichten lassen sich nur eine relativ geringe Anzahl Ruß- oder anderer schwarzer Pigmentpartikel einbringen mit der Folge, dass keine vollständige Absorption des Lichtes erreicht wird. Mit dem Auge und auch mit intensiveren Lichtquellen (Lichtstärke größer 600 Candela) kann die mangelnde Absorption ermittelt werden.

Ein weiteres Konzept zur Herstellung von schwarzen doppelseitigen Haftklebebändern betrifft die Herstellung eines zweischichtigen oder dreischichtigen Trägermaterials mittels Coextrusion. Trägerfolien werden in der Regel über Extrusion hergestellt. Durch die Coextrusion wird neben dem konventionellen Trägermaterial eine zweite und optional auch eine dritte schwarze Schicht coextrudiert, die die Funktion der Lichtabsorption erfüllt. Auch dieses Konzept weist verschiedene Nachteile auf. Z. B. müssen für die Extrusion Antiverblockungsmittel eingesetzt werden, die dann im Produkt zu sogenannten Pinholes führen. Diese Pinholes sind optische Störstellen (Lichtdurchtritt an diesen Löchern) und beeinflussen negativ die Funktionsweise im LCD.
Ein weiteres Problem sind die Schichtdicken, da die zwei bzw. drei Schichten zunächst einzeln in der Düse ausgeformt werden und sich somit insgesamt nur relativ dicke Trägerschichten realisieren lassen, mit der Folge, dass die Folie ebenfalls relativ dick und unflexibel wird und sich somit an die zu verklebenden Flächen nur noch schlecht anpasst. Zudem muss-die schwarze Schicht ebenfalls relativ dick sein, da ansonsten keine vollständige Absorption realisiert werden kann. Ein weiterer Nachteil besteht in den veränderten mechanischen Eigenschaften des Trägermaterials, da zumindest eine schwarze Schicht coextrudiert wird, die andere mechanische Eigenschaften als das ursprüngliche Trägermaterial (z. B. PET) aufweist. Ein weiterer Nachteil für die zweischichtige Version des Trägermaterials ist die unterschiedliche Verankerung der Klebemasse auf dem coextrudierten Trägermaterial. Für diesen Fall ist immer eine Schwachstelle im doppelseitigen Klebeband enthalten.

In einem weiteren Konzept wird eine schwarze Farblackschicht auf das Trägermaterial einseitig oder beidseitig beschichtet. Dies kann einseitig oder doppelseitig auf dem Träger erfolgen. Auch dieses Konzept weist verschiedene Nachteile auf. Zum einen entstehen auch hier leicht Fehlstellen (Pinholes), die durch Antiblockungsmittel während des Folienextrusionsprozesses mit eingetragen werden, und die nicht überlackiert werden können. Diese sind für die finale Anwendung im LC-Display nicht akzeptabel. Zum anderen entsprechen die maximalen Absorptionseigenschaften nicht den Anforderungen, da nur relativ dünne Lackschichten aufgetragen werden. Auch hier ist man in den Schichtdicken nach oben begrenzt, da sich ansonsten die mechanischen Eigenschaften des Trägermaterials verändern würden. Weiterhin neigen eingefärbte Klebemassen dazu, die Farbstoffe an das Substrat, auf dem sie verklebt sind, abzugeben.
Ein weiterer Nachteil ergibt sich dadurch, dass als Farbpigmente üblicherweise Ruß eingesetzt wird. Ruß weist aber den Nachteil auf, dass es elektrisch leitfähig ist, so dass es insbesondere bei einem höheren Russgehalt zu Kurzschlüssen kommen kann.

Bei der Entwicklung von LC-Displays entwickelt sich ein Trend. Zum einen sollen die LC-Displays leichter und sowie flacher werden und es besteht ein stark steigender Bedarf für immer größere Displays mit immer höherer Auflösung.
Aus diesem Grund wurde das Design der Displays geändert und die Lichtquelle rückt dementsprechend immer näher an das LCD-Panel, mit der Konsequenz, dass die Gefahr steigt, dass immer mehr Licht von außen in die Randzone des LCD-Panels eindringt ("blind area"). Mit dieser Entwicklung steigen somit auch die Anforderungen an die Abschattungseigenschaften ("black out"-Eigenschaften) des doppelseitigen Klebebandes und es besteht somit der Bedarf nach neuen Konzepten zur Herstellung von schwarzen Klebebändern.

In der JP 2002-350612 werden doppelseitige Klebebänder für LCD-Panels mit lichtschützenden Eigenschaften beschrieben. Die Funktion wird durch eine ein- oder beidseitig auf die Trägerfolie aufgetragene Metallschicht erreicht, wobei die Trägerfolie zusätzlich noch eingefärbt sein kann. Mit der beidseitigen Metallisierung der Trägerfolien wird aber nur die Ursache der Pinholes zu kompensieren versucht. Eine Vermeidung der Pinholes an sich wird mit diesem Konzept nicht erzielt.

In der JP 2002-023663 werden ebenfalls doppelseitige Klebebänder für LCD-Panels mit lichtschützenden Eigenschaften beschrieben. Auch hier wird die Funktion durch eine ein- oder beidseitig auf die Trägerfolie aufgetragen Metallschicht erreicht. Weiterhin umfasst das Patent eingefärbte Klebemassen. In Analogie zur JP 2002-350612 wird wiederum nur durch eine beidseitige Metallisierung der Trägerfolien die Ursache der Pinholes zu kompensieren versucht.

Aufgabe der Erfindung ist es, Klebebänder anzubieten, die eine gute Eignung für die Anforderungen im Bereich der Elektronikbauteil-Verklebung aufweisen.

Gelöst wird die Aufgabe durch Klebebänder, die einen Schaumstoffträger sowie eine zweite, verstärkende Trägerschicht aufweisen, dabei aber eine hinreichend geringe Schichtdicke besitzen und trotzdem hervorragende Eigenschaften bezüglich der Lichtabsorption aufweisen. Zur Konfektionierung für den Anwendungsbereich sollen die Klebebänder eine gute Stanzbarkeit aufweisen.

Gelöst wird die Aufgabe durch ein doppelseitiges Klebeband zur Verklebung von elektronischen Bauteilen, bestehend aus

zwei außen liegende Klebemassenschichten,
eine Trägerschicht aus einem geschäumten Polymermaterial (auch als Schaumträgerschicht bezeichnet),
eine mit der geschäumten Trägerschicht mittels einer Kaschierklebemasse oder einem Kaschierklebeband zusammenkaschierte Trägerschicht in Form einer Folie aus einem Polymermaterial (auch als Folienträgerschicht bezeichnet),
wobei
die Schaumträgerschicht eine Dicke von nicht mehr als 400 µm
und die Folienträgerschicht eine Dicke von nicht mehr als 40 µm aufweist
und wobei
sowohl die Schaumträgerschicht als auch die Folienträgerschicht schwarz eingefärbt sind.

Das erfindungsgemäße Klebeband weist vorteilhaft eine Gesamtdicke von nicht mehr als 500 µm, insbesondere eine Dicke in einem Bereich von 200 bis 500 µm auf. Sofern im Rahmen dieser Schrift Gesamtdicken des Klebebandes angegeben werden, beziehen sich diese auf den Anwendungszustand, also ohne Abdeckung (Trennmaterial) auf den Klebemassen.

Als Klebemasse für die äußeren Klebemassenschichten A und B können die gängigen Klebemassen eingesetzt werden. Insbesondere geeignet sind Reinacrylatsysteme, modifizierte Acrylatsysteme, wobei der Begriff "Acrylat" im Sinne der vorliegenden Schrift die Methacrylate mit umfasst.
Die Klebemassenschichten A und B können dabei bezüglich ihrer chemischen Zusammensetzung und/oder ihrer Ausgestaltung (Schichtdicke, Auftragungsart) identisch oder verschieden gewählt werden. Hiermit kann die jeweilige Klebebandseite auf das jeweilige Substrat, auf das bei dem beabsichtigten Anwendungsgebiet verklebt wird, optimal angepasst werden.
Als äußere Klebemassen werden insbesondere vorteilhaft Haftklebemassen eingesetzt.

Die Flächendichte der Klebemassenschichten (also der Klebmasseauftrag auf ihrem jeweiligen Untergrund, insbesondere Folienträgerschicht bzw. Schaumstoffträgerschicht) beträgt vorteilhaft 20 bis 100 g/m², vorzugsweise 50 g/m².

Zur Verbesserung der Lichtabsorption kann das erfindungsgemäße Klebeband optional derart gestaltet sein, dass zumindest eine der äußeren (Haft-)Klebemassen, bevorzugt beide Klebemassen dunkel, insbesondere anthrazitfarben oder schwarz eingefärbt sind. Vorteilhaft werden hierfür Klebemassen eingesetzt, die nicht elektrisch leitfähig sind.

Das Klebeband umfasst weiterhin zumindest eine Schicht eines Schaumes (im folgenden werden solche Schichten auch als "Schaumträger" oder "Schaumträgerschicht" bezeichnet).
Erfindungsgemäße Schaumstoffe für die Schaumträger sind insbesondere Homo- und Copolymere des Ethylens, insbesondere Polyethylene (PE) niederer und sehr niederer Dichte (LDPE, LLDPE, VLDPE), Ethylen-Vinylacetat-Copolymere (EVA), sowie Gemische vorgenannter Polymere (z.B. PE-EVA-Schäume). Weitere Polymere können u. a. sein: Polyvinylacetate, Polypropylene, Ethylen-Propylen-Dien-Kautschuk (EPDM), thermoplastische Elastomere auf Basis von Styrolblockcopolymeren, Polyurethane auf Basis aromatischer und aliphatischer Diisocyanate, Polyvinylchlorid (PVC), Polychloroprene, Naturkautschuk, Acrylatcopolymere. Schaumstoffe können vernetzt oder unvernetzt zum Einsatz kommen.
Als Schaumträger werden insbesondere vorteilhaft Schäume aus Polyethylen, Ethylenvinylacetat (PVA), Polypropylen (PP), Polyurethan (PUR) eingesetzt. Weiterhin können als Schäume hervorragend Polymerblends aus Polyethylen (PE) und Ethylenvinylacetat (PVA) eingesetzt wreden, wobei vorzugsweise auf ein Ethylenvinylacetat mit einem Vinylacetatanteil von bis zu 15 Gew.-% zurückgegriffen wird.

Erfindungsgemäß werden Schaumträger eingesetzt, die schwarz gefärbt sind. Dunkle Schaumträger sind geeignet, eine Lichtabschirmung zu bewirken, so dass die entsprechenden Klebebänder insbesondere vorteilhaft dann eingesetzt werden können, wenn durch die Verklebung kein Licht dringen soll.
Die erfindungsgemäß eingesetzten Schaumträger können zum besseren Verankern der auf ihr vorgesehenen Schichten vorbehandelt werden. Als Vorbehandlung eignen sich besonders bevorzugt die Behandlung mit Corona, das Ätzen und/oder die Ausrüstung mit einem Primer, also einem Vorstrich, der die Verankerungseigenschaften der Folie verbessert. Als sehr bevorzugt hat es sich herausgestellt, wenn die Schaumträgerschichten sowohl mit Corona behandelt als auch geätzt werden. Die Vorbehandlung des Schaumträgers kann dabei ein- als auch beidseitig geschehen.

Die Schaumstruktur kann geschlossenzellig, offenzellig oder gemischtzellig sein. Genutzt werden können verhautete oder nicht verhautete Schäume von integraler oder nicht integraler Struktur. Erfindungsgemäß einsetzbar sind ebenfalls Laminate mehrerer Schaumstoffe.
Über die Dicke der Schaumträgerschichten lässt sich die Gesamtdicke des erfindungsgemäßen Klebebandes hervorragend variieren. Hierdurch lassen sich erfindungsgemäße Klebebänder in nahezu allen benötigten Gesamtdicken bereitstellen, wobei die Erfindung insbesondere auch zur Herstellung besonders dünner Schaumstoffklebebänder geeignet ist.
Die Schaumträgerschichten weisen erfindungsgemäß bevorzugt eine Dicke von 100 bis 400 µm auf. Die Raumdichte der Schäume betragen bevorzugt 100 bis 400 kg/m³, besonders bevorzugt 200 bis 330 kg/m³.

Das erfindungsgemäße doppelseitige Klebeband ist verstärkt durch die Ausrüstung mit einer Verstärkungsfolie (Trägerfolie mit stabilisierender Wirkung für das Klebeband; im folgenden auch als Folienträger und auch als Folienträgerschicht bezeichnet). Vorteilhaft wird als Folienträger eine Folie aus Polyethylenterephthalat (PET) eingesetzt. Insbesondere vorteilhaft weist die Folienträgerschicht eine Dicke von 2 bis 36 µm, besser von 8 bis 15 µm, in besonders vorteilhafter Vorgehensweise von 12 µm auf. Der Folienträger ist schwarz eingefärbt. Eine schwarze Verstärkungsfolie kann wiederum dazu dienen, die Licht-Transmission des Klebebandes zu verringern oder ganz auszuschalten. Die Folie ist insbesondere vorteilhaft lichtundurchlässig.
Durch den Einsatz einer dünnen, insbesondere lichtundurchlässigen oder gering lichtdurchlässigen Verstärkungsfolie kann die Gesamtdicke des Klebebandes, verglichen mit dem Stand der Technik, deutlich verringert werden, wie dies insbesondere für den Einsatz für die Verklebung elektronischer Bauteile wünschenswert ist. Dabei muss eine hinreichende Kompressibilität des Klebebandes gewahrt bleiben, um Unebenheiten bei der Verklebung ausgleichen zu können.
Aufgrund der Kompressibilitätsanforderungen kann bei entsprechend eingesetzten Klebebändern auf einen Schaumträger nicht verzichtet werden. Die Verminderung der Schaumdicke hat aber zwei Nachteile, nämlich eine Einbuße der Stabilität des Klebebandes als auch eine erhöhte Lichtdurchlässigkeit. Die Erniedrigung der Stabilität wird erfindungsgemäß durch den Einsatz eine wie vorstehend beschriebenen Verstärkungsfolie ausgeglichen oder gegebenenfalls sogar überkompensiert. Verstärkungsfolie, wie sie aus dem Stand der Technik als Trägerfolie für Klebebänder bekannt sind, sind aber nicht in der Lage, die Licht-Transmission durch ein Klebeband zu verringern. Als besonders vorteilhaft hat sich hierfür herausgestellt, wie erfindungsgemäß realisiert eine schwarze Trägerfolie einzusetzen.
Ganz besonders gut lichtabschirmende Klebebänder erhält man dadurch, dass erfindungsgemäß sowohl das oder die Schaumträgerschichten als auch die Verstärkungsfolie dunkel, nämlich schwarzfarben sind.
Die erfindungsgemäß eingesetzte Verstärkungsfolie kann zum besseren Verankern der auf ihr vorgesehenen Schichten vorbehandelt werden. Als Vorbehandlung eignen sich besonders bevorzugt die Behandlung mit Corona, das Ätzen und/oder die Ausrüstung mit einem Primer, also einem Vorstrich, der die Verankerungseigenschaften der Folie verbessert. Als sehr bevorzugt hat es sich herausgestellt, wenn die Folie sowohl mit Corona behandelt als auch geätzt wird.
Je nachdem, welche Schichten auf der Folie verankert werden sollen, kann nur eine der Folienseiten oder beide Folienseiten entsprechend vorbehandelt werden.

Zur Schwarzfärbung der äußeren Klebemassen und/oder der Schaumträgerschicht(en) und/oder der Verstärkungsfolie(n) können die üblichen schwarzfärbenden Substanzen, wie insbesondere Ruß, eingesetzt werden. Insbesondere vorteilhaft werden für zumindest eine der Trägerschichten schwarze Farbmittel (erfindungsgemäß umfassend sowohl lösliche Farbstoffe als auch unlösliche Farbpigmente) eingesetzt, die keine elektrische Leitfähigkeit aufweisen. Verwendet werden hierfür insbesondere vorteilhaft organische schwarzfärbende Farbmittel. So sind erfindungsgemäße Klebebänder sehr bevorzugt, bei denen der Schaumträger durch Ruß und der Folienträger durch einen nicht leitfähiges schwarzes, insbesondere organisches, Farbmittel eingefärbt ist. In einer weiteren vorteilhaften Vorgehensweise können auch sowohl die Schaumträgerschicht als auch die Folienträgerschicht durch nicht leitfähiges schwarzes, insbesondere organisches, Farbmittel eingefärbt sein, wobei für den Schaumträger und die Folie das identische Farbmittel oder auch unterschiedliche Farbmittel eingesetzt werden können.

Als organische schwarzfärbende Farbmittel werden vorteilhaft einer oder mehrere Farbmittel aus der folgenden Liste gewählt:
Reaktivfarbstoffe, Azofarbstoffe, Nigrosine, Perylen-Pigmente, Mischphasenpigmente "Solid-Solution-Pigmente"), insbesondere Anilinschwarz, Perylenschwarz, Brilliantschwarz BN, Reactive Black 5, Schwefelschwarz T.
Organische Farbmittel haben den Vorteil, dass sie keine elektrische Leitfähigkeit aufweisen und eine sehr geringen Neigung zum Ausbluten, also zum Migirieren an den Grenzflächen in benachbarte Medien, besitzen. Das fertige Produkt weist somit keine inhärente elektrische Leitfähigkeit (insbesondere durch die das Klebeband hindurch) auf, so dass die Kurzschlussgefahr minimiert wird. Als weiterer Vorteil kommt hinzu, dass der häufig auftretende schlechte Einfluss von Rußfarbmitteln ("Carbon Black") auf die mechanischen Festigkeiten bei organischen Farbstoffen und -pigmenten regelmäßig nicht beobachtet wird.

Sowohl die Verstärkungsfolie als auch die erfindungsgemäß eingesetzten Schäume besitzen üblicherweise antiadhäsive Eigenschaften. Es ist daher schwierig, einen guten Verbund zwischen diesen Schichten herzustellen.
Vorteilhaft wird hierfür eine Schicht eines Kaschierklebers eingesetzt. Als Kaschierkleber lassen sich dabei die dem Fachmann geläufigen, für beide Materialien (Verstärkungsfolie und Schaum) geeigneten Klebemassen oder Klebebänder einsetzen. Als Klebemassen kommen insbesondere Haftklebemassen auf (Meth-)Acrylatbasis oder auf Kautschukbasis in Frage. Es ist bei einlagigen (trägerlosen) Kaschierklebebändern und symmetrischen doppelseitigen Klebebändern insbesondere eine Kaschierklebemasse zu wählen, die eine gute Eignung für beide Trägermaterilien aufweist.
Um die Verbundfestigkeit zu verbessern, lassen sich hier vorteilhaft doppelseitige Klebebänder einsetzen, die auf ihren beiden Seiten unterschiedliche Klebemassen aufweisen, insbesondere wobei die Klebemassen für das jeweils zu verklebende Material (das der Verstärkungsfolie bzw. das des Schaums) optimiert sind.
In Hinblick auf die Gesamtdicke des erfindungsgemäßen Klebebandes zeichnet sich eine vorteilhafte Ausgestaltung der Kaschierkleberschicht dadurch aus, dass sie sehr dünn gehalten wird. Insbesondere vorteilhaft werden hier Schichten von nicht mehr als 50 µm, besser von nicht mehr als 30 µm eingesetzt. Als sehr vorteilhaft hat sich eine Kaschierkleberschicht von 20 µm erwiesen, besonders vorteilhaft eine solche auf Basis von insbesondere harzabgemischten Polyacrylaten und/oder Polymethacrylaten.
Zur Herstellung insbesondere trägerloser, einschichtiger Kaschierkleberschichten wird die Klebemasse bevorzugt mit einem Flächengewicht von nicht mehr als 50 g/m², besser von nicht mehr als 30 g/m² aufgetragen. Eine sehr vorteilhafte Kaschierkleberschicht dieser Art hat ein Flächengewicht von 20 g/m².

Die Verbundfestigkeit zwischen der Verstärkungsträgerschicht und der Schaumträgerschicht kann vorteilhaft verstärkt werden, indem der Folienträger oder der Schaumträger oder vorteilhaft sowohl der Folienträger als auch der Schaumträger jeweils zumindest auf der Seite, die dem Verbundpartner zugewandt ist (also auf Seiten der Schicht der Kaschierklebemasse), durch eine Ätzung und/oder durch Coronabehandlung (Corona-Entladung) vorbehandelt worden sind.
In sehr bevorzugter Weise kann die Corona-Behandlung inline, also in den Fertigungsprozess integriert, erfolgen.
Insbesondere im Falle einer chemischen Vorbehandlung kann der jeweilige Träger zunächst vorteilhaft mit Vorstrich versehen, wobei in einer besonders bevorzugten Auslegung Reaktiv-Vorstriche verwendet werden. Als Vorstrichmaterialien eignen sich z.B. Reaktivprimer.

Eine Vorbehandlung der Trägerschichten (Folienträger und/oder Schaumträger) auf der jeweils der Kaschiermasse abgewandten Seite dient der besseren Verankerung der äußeren Klebemassenschichten.

Das erfindungsgemäße Klebeband ist vorteilhaft auf einer seiner Seiten mit einem Trennmaterial abgedeckt, um die Handhabung zu erleichtern und das Klebeband insbesondere zu einer Rolle (technisch genauer: zu einer archimedischen Spirale) wickeln zu können.
Als Abdeckmaterialien eigenen sich die üblichen, für die entsprechende Klebemasse bekannten adhäsiven Materialien. So lassen sich hervorragend Trennpapiere mit speziellen Releaseeigenschaften einsetzen. Bevorzugt können auch Polyethylen-Trennfolien eingesetzt werden.
Die Trennmaterialien können inhärent oder durch vorherige entsprechende Behandlung, z.B. durch Silikonisierung, mit entsprechenden antiadhäsiven Eigenschaften (Releaseeigenschaften) versehen sein.

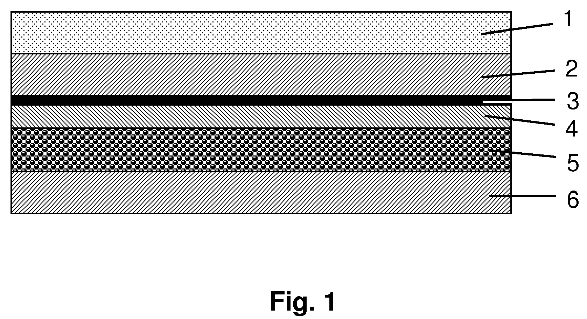

Ein vorteilhaftes erfindungsgemäßes Klebeband zeigt einen Aufbau, wie er in Figur 1 dargestellt ist. dabei bedeuten:
- 1: Abdeckung (Trennmaterial)
- 2: Klebmassenschicht
- 3: Verstärkungsfolie
- 4: Kaschierklebemasse oder Kaschierklebeband
- 5: Schaumträgerschicht
- 6: Klebemassenschicht

Ein erfindungsgemäßes Haftklebeband besteht vorteilhaft gemäß Figur 1 aus einem Trägerverbund, bestehend aus einer Schaumträgerschicht 5 und einer Verstärkungsträgerschicht 3, die über eine Kaschierklebemasse 4 zusammengefügt sind. Vorteilhafterweise sind zur Erhöhung der Festigkeit des Trägerverbundes sowohl die Schaumschicht als auch die Verstärkungsträgerschicht auf der Seite der Kaschierklebemasse sowohl durch Ätzung und/oder durch eine Coronabehandlung vorbehandelt. Die Verstärkungsträgerschicht 3 ist vorteilhaft dunkel, besonders vorteilhaft schwarz eingefärbt.
Auf beiden Seiten des Verbundes (3, 4, 5) ist jeweils eine Schicht einer Klebemasse (2, 6) vorgesehen; wobei die Klebemassen (2, 6) insbesondere vorteilhaft identitisch gewählt werden. Es kann aber auch vorteilhaft sein, unterschiedliche Klebemassen (2, 6), vorzusehen.
Zumindest auf einer der beiden Klebemassenschichten (2, 6) ist eine Abdeckung vorgesehen; insbesondere in Form eines entsprechend vorbehandelten (beispielweise silikonisierten) Trennpapiers oder einer entsprechenden Trennfolie.

Als ein hervorragendes erfindungsgemäßes Klebeband der vorstehend ausgeführten Form (Figur 1) hat sich ein solches mit den folgenden Parametern herausgestellt:
Die Verstärkungsfolie (3), die schwarz ist, weist eine Dicke von 12 µm aus, weiterhin eine Schaumträgerschicht aus einem EVA-Schaum mit einem VA-Anteil von unter 15%, wobei auch der Schaum selbst schwarz ist. Die Dichte des Schaumes beträgt 250 kg/m³. Die Kaschierklebemassenschicht weist einen Massenauftrag von etwa 20 g/m² auf; entsprechend einer Schichtdicke von etwa 20 µm. Als äußere Klebemassen (2, 6) werden Acrylatklebemassen (Reinacrylate oder modifizierte Acrylate) eingesetzt, vorteilhaft jeweils mit einem Masseauftrag von 50 g/m² (entsprechend einer Schichtdicke von jeweils etwa 50 µm).
Dieses Klebeband lässt sich vorteilhaft in unterschiedlichen Gesamtdicken herstellen, je nach den Anforderungen des beabsichtigten Einsatzgebietes. Vorteilhaft werden Klebebänder von 200 - 500 µm Gesamtdicke, insbesondere von 250 bis 450 µm Gesamtdicke realisiert, wobei die Gesamtdicke des Klebebandes bei sonst gleich bleibenden Schichtdicken durch die Dicke der Schaumträgerschicht eingestellt werden kann.
Die vorstehenden Angaben bezüglich Schichtdicken, Massenaufträgen und dergleichen verstehen sich im Rahmen der üblichen Produktionstoleranzen.

Ein vorteilhaftes Verfahren zur Herstellung der erfindungsgemäßen Klebebänder zeichnet sich durch einen mehrstufigen Prozess aus.

In einem ersten Schritt werden die außenliegenden Klebemassen (2 und 6) und die Kaschierklebemasse (4) - die Bezugnahme auf die Positionsziffern der Figur 1 soll das Verfahren nicht auf diese Ausführungsform beschränken - unabhängig voneinander jeweils auf einen Prozessliner (temporären Träger) aufgelegt. In einem nächsten Schritt wird die vorher bereitete Schicht des ersten äußeren Klebers (2), der auf der Klebebandseite der Verstärkungsträgerschicht zu liegen kommt, mit ihrer freiliegenden Seite auf eine entsprechende - insbesondere beidseitig vorbehandelte - (im späteren Klebeband als Verstärkungsträger dienende) Folienschicht aufgelegt. In vorteilhafter Vorgehensweise wird der Prozessliner abgedeckt und ein Anwendungsliner (also der Liner, mit dem das Klebeband letztlich angeboten wird), aufgelegt.
In einem weiteren Schritt wird die vorher bereitete Schicht des zweiten äußeren Klebers (6), der auf der Klebebandseite der Schaumträgerschicht zu liegen kommt, mit ihrer freiliegenden Seite auf eine entsprechende - insbesondere beidseitig vorbehandelte - Schaumstoffschicht aufgelegt. Die derart hergestellten Verbünde (Verstärkungsträgerschicht mit Klebemasse und Schaumstoffträgerschicht mit Klebemasse) werden dann mit einer Kaschierklebemasse oder einem doppelseitigen Kaschierklebeband mit den jeweils nicht mit Klebemasse versehenen Seiten der Trägerschichten zusammenkaschiert. In einer alternativen Vorgehensweise kann die Zusammenkaschierung der beiden Trägerschichten bereits in dem Schritt erfolgen, in dem auf die Schaumstoffträgerschicht die zweite außenliegende Klebemasse (6) aufkaschiert wird.

Zur Aufwicklung eines derartig hergestellten Klebebandes entfernt man vorteilhafterweise den auf der zweiten äußeren - schaumstoffseitigen - Klebemassenschicht verbliebenen Prozessliner.

Zur Erzeugung einer ausreichenden Verankerung der eingesetzten Haftklebemassen auf den Schaumstoffen werden diese vorteilhaft bei der Schaumherstellung und / oder vor der Beschichtung einer Druckvorbehandlung unterzogen. Geeignete Vorbehandlungsverfahren sind u. a. die Fluorvorbehandlung, die Coronavorbehandlung, die Plasmabehandlung und die Flammvorbehandlung, letztere insbesondere mittels elektrisch polarisierter Flamme. Vorbehandlungsmethoden können alleine oder in Kombination angewandt werden. Bei verhauteten Schäumen und bei Integralschäumen kann zur weiteren Verbesserung der Klebmasseverankerung eine Primerung des Schaumes durchgeführt werden.

Offenzellige und gemischtzellige Schäume können einer Imprägnierung unterzogen sein. Zwischen Schaumstoff und Haftklebemassen kann optional eine Sperrschicht integriert sein, um die Wanderung migrationsfähiger Materialien zwischen Haftklebemassen und Träger zu reduzieren.

Die erfindungsgemäßen Klebebänder sind hervorragend geeignet, die Nachteile des Standes der Technik zu vermeiden. Durch Verwendung einer Verstärkungsfolie im Klebeband lässt sich das Klebeband bezüglich der Gesamtdicke deutlich verringern, was den Anforderungen im Bereich der Elektronikbauteil-Verklebung entgegenkommt. Durch die Verringerung der Dicke der Schaumschicht(en), verglichen mit den Klebebänder aus dem Stand der Technik, nimmt aber die Lichtundurchlässigkeit des Klebebandes ab. Je dünner die Schäume sind, desto mehr verlieren sie an Schwärze (und somit an Lichtundurchlässigkeit) und erscheinen zunehmen grau beziehungsweise anthrazit. Dieser Effekt kann erfindungsgemäß dadurch angefangen und sogar überkompensiert (also auf eine geringere Lichtdurchlässigkeit als das Vergleichsprodukt des Standes der Technik gebracht) werden, dass die Verstärkungsfolie schwarz eingefärbt wird. Bei Verwendung geeigneter Verstärkungsfolien im oben genannten Dickenbereich, insbesondere bei einer Dicke von 12 µm, wird das sichere Handling im Verarbeitungsprozess bei der Endanwendung nicht signifikant gestört oder nachteilig beeinflusst. Gleichzeitig werden die für Schaumstoffträger spezifischen vorteilhaften Eigenschaften, wie insbesondere die Schlagabsorption, die Benetzungsfähigkeit, die Spaltausgleichfähigkeit, die Spannungsausgleichfähigkeit allgemein und besonders diejenige von unterschiedlichen Fügungspartnern nahezu vollständig erhalten; es ist kein signifikanter Verlust der entsprechenden Eigenschaften festzustellen.

Durch die Kombination von dünnen Schäumen, insbesondere im Dickenbereich von 100 bis 400 µm, mit verstärkenden Folienträger, vorzugsweise PET-Folien im Dickenbereich von 4 bis 36 µm, lassen sich Produkteigenschaften realisieren, die mit klassischen Produkten (insbesondere sogenannten Spacertapes) nicht erzielt werden können. In der Regel wird bei solchen Produkten zur Erreichung einer erforderlichen Produktdicke die Dicke der Trägerfolie entsprechend erhöht. Dies wiederum hat zur Folge, dass solche Klebebänder nur sehr schlecht oder auch gar nicht stanzbar sind. Bedingt durch die hohe Eigensteifigkeit solcher dicken Folienträger geht eine schlechte Verarbeitbarkeit bei der Anwendung daher.
Die erfindungsgemäßen Klebebänder zeigen diese Nachteile nicht und weisen insbesondere eine gute Stanzbarkeit auf, so dass sich die für den Anwendungsbereich erforderlichen Klebebandstanzlinge oder Etiketten hervorragend herstellen lassen.

Die erfindungsgemäßen Klebebänder weisen weiterhin den Vorteil auf, dass durch die Dunkel- bzw. Schwarzfärbung aufgrund einer möglichen Kontrasterkennung Prozessvorteile bezüglich automatisierter Stanzprozesse genutzt werden können. Dieser Vorteil lässt sich auch für automatisierte Dispensprozesse des Klebebandes bzw. der Stanzlinge nutzen.

### Experimente

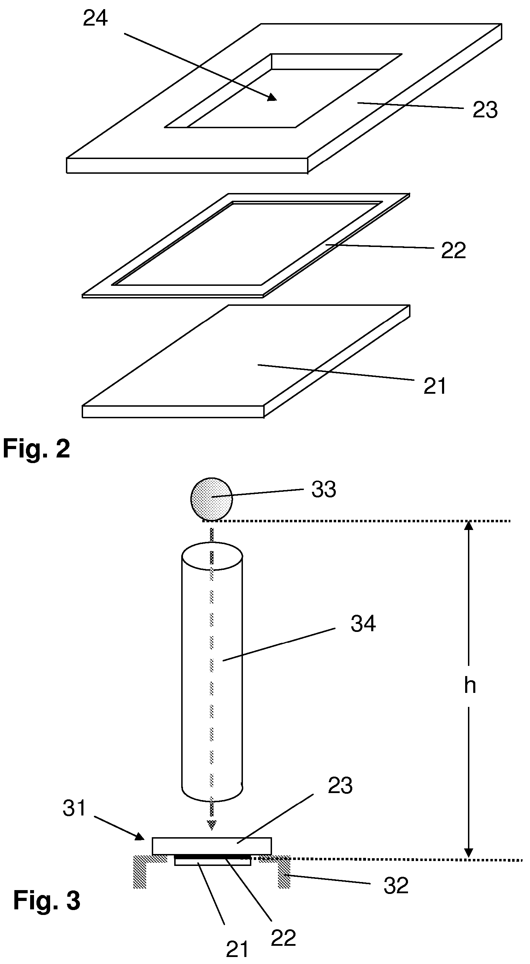

Zur Quantifizierung der Kälteschlagbeständigkeit (Schlagabsorption) der erfindungsgemäßen Klebebänder wurde die folgende Untersuchung durchgeführt. Herstellung des Prüfmusters (vgl. Fig. 2):
Auf eine Platte (21) aus Polymethylmethacrylat (PMMA) mit den Dimensionen 35 mm x 45 mm und einer Dicke von 1 mm wird mit dem zu untersuchenden Klebeband (22) (rahmenförmiger Stanzling (22), Außendimensionen 35 mm x 45 mm; Rahmenstärke 2,0 mm: ⇒ Innendimensionen 31 mm x 41 mm) ein Rahmen (23) aus einem AcrylnitrilButadien-Styrol-Copolymer (ABS) (Außendimensionen 40 mm x 50 mm; Dimensionen des Fensters (24) (= Innendimensionen des Rahmens) 30 mm x 24 mm; Fenster symmetrisch im Rahmen angeordnet) verklebt. Zur Verklebung wird auf das Prüfmuster mit einem Gewicht von 6 kg für 5 s ein entsprechender Druck ausgeübt. Das Prüfmuster wird daraufhin 24 h bei 23 ± 1 °C ruhen gelassen.
Es wird ein Prüfmuster hergestellt, bei dem der Schaumträger auf Seiten der PMMA-Platte und der Folienträger auf Seiten des ABS-Rahmens liegt (Prüfmuster A) und ein solches, bei dem das erfindungsgemäße Klebeband umgekehrt angeordnet ist (Folienträger zur PMMA-Platte gerichtet und Schaumträger zum ABS-Rahmen gerichtet; Prüfmuster B).

### Messung (vgl. Fig. 3):

Das Prüfmuster (31) wird derart auf eine Halterung (32) positioniert, dass der Rahmen (23) mit seinen über die mit ihm verklebte Polymethacrylatplatte (21) herausragenden Bereichen aufliegt und die PMMA-Platte (21) frei nach unten hängt. Eine Edelstahlkugel (33) (Durchmesser 15 mm, Gewicht 13,7 g) lässt man aus unterschiedlichen Fallhöhen (h) auf das zu untersuchende Prüfmuster (31) fallen, so dass sie durch das Fenster (24) des ABS-Rahmens fällt und auf die PMMA-Platte (21) schlägt. Ein Aluminiumrohr (34) dient als senkrechte Führungshilfe für den Fall. Die Messung wird bei -20 °C (Temperatur der zu untersuchenden Probe; vorteilhaft des gesamten Proberaums) durchgeführt. Mit diesem Test wird die maximale Fallhöhe hₘₐₓ ermittelt, bei der die mittels des zu untersuchenden Klebebandes (22) bewirkte Verklebung zwischen der PMMA-Platte (21) und dem ABS-Rahmen (23) nach dem Aufprall der Stahlkugel noch unbeschädigt bleibt.

Ergebnis: Beide Prüfmuster (A, B) mit einem erfindungsgemäßen Klebeband (Schaumträger: PE-EVA-Schaum; Schaumträgerdicke 250 µm; Folienträger: PET-Folie; Folienträgerdicke: 12 µm; äußere Klebemassen (Schichtdicke jeweils 50 µm) und Kaschierklebemasse (Schichtdicke: 20 µm): handelsübliche harzmodifizierte Acrylathaftklebemassen) hielt eine maximale Fallhöhe hₘₐₓ von 45 cm aus.
Ein Prüfmuster mit einem Vergleichsklebeband (doppelseitiges Klebeband mit einem 50 µm dicken Polyethylen-Träger (PET-Träger); beidseitig beschichtet mit der identischen Acrylathaftklebemasse wie in der erfindungsgemäßen Probe, Dicke des Klebebandes 250 µm) hielt lediglich eine maximale Fallhöhe hₘₐₓ von 3 cm aus.

Das optische Verhalten der erfindungsgemäßen Klebebänder wurde wie folgt untersucht: Mit einem Byk-Gardner TCS The Colour Sphere Spektrophotometer; Wellenlängenbereich 380 - 720 nm; wird die Transmittanz (Luminous transmittance in %) gemessen, also die Lichtdurchlässigkeit der zu untersuchenden Klebebänder (erfindungsgemäße Probe und Vergleichsprobe) bestimmt.
Als Probemuster wird eine erfindungsgemäßes Klebeband (Schaumträger: PE-EVA-Schaum (schwarz); Schaumträgerdicke 190 µm; Folienträger: PET-Folie (schwarz); Folienträgerdicke: 12 µm; äußere Klebemassen (Schichtdicke jeweils 50 µm) und Kaschierklebemasse (Schichtdicke: 20 µm): handelsübliche harzmodifizierte Acrylathaftklebemassen) eingesetzt. Als Vergleichsfolie wird ein Klebeband eingesetzt, bei welchem die Folienträgerschicht und die Kaschierklebemassenschicht bei ansonsten identischen Schichten fehlen.

Beide Klebebänder wurden jeweils von beiden Seiten vermessen.
- Probe 1:: erfindungsgemäßes Klebeband; von der bezüglich Fig. 1 oberen Seite aus durchstrahlt
- Probe 2:: erfindungsgemäßes Klebeband; von der bezüglich Fig. 1 unteren Seite aus durchstrahlt
- Proben 3 und 4:: Vergleichsklebeband

Die Ergebnisse zeigt die folgende Tabelle:

| | **Light reflectance factor [%]** | | | **Luminous transmittance [%]** | **Chroma** | | | **Chroma** | | |
|---|---|---|---|---|---|---|---|---|---|---|
| | **total** | **diffuse** | **directional** | **total** | **L*** | **a*** | **b*** | **X** | **Y** | **Z** |
| Probe 1 | 5,18 | 2,46 | 2,74 | **0,03** | 27,24 | 0,10 | 0,32 | 5,70 | 5,18 | 1,82 |
| Probe 2 | 5,20 | 1,75 | 3,45 | **0,01** | 27,30 | -0,09 | -0,16 | 5,70 | 5,20 | 1,86 |
| Probe 3 | 5,22 | 2,45 | 2,77 | **0,30** | 27,34 | 0,02 | 0,43 | 5,73 | 5,22 | 1,82 |
| Probe 4 | 5,09 | 2,22 | 2,88 | **0,33** | 26,98 | 0,03 | 0,07 | 5,59 | 5,09 | 1,80 |

Es zeigt sich, dass für die Klebebänder mit dem erfindungsgemäßen Produktaufbau die Transmittanz signifikant geringer ist.

## Patentansprüche

1. Doppelseitiges Klebeband zur Verklebung von elektronischen Bauteilen, bestehend aus
zwei außen liegenden Klebemassenschichten,
einer Trägerschicht aus einem geschäumten Polymermaterial,
einer mit der geschäumten Trägerschicht mittels einer Kaschierklebemasse oder einem Kaschierklebeband zusammenkaschierte Trägerschicht in Form einer Folie aus einem Polymermaterial
sowie einer Abdeckung mit einem Trennmaterial auf zumindest einer der Klebemassenschichten,
wobei
die Schaumträgerschicht eine Dicke von nicht mehr als 400 µm
und die Folienträgerschicht eine Dicke von nicht mehr als 40 µm aufweist,
**dadurch gekennzeichnet, dass**
sowohl die Schaumträgerschicht als auch die Folienträgerschicht schwarz eingefärbt sind.

2. Klebeband nach Anspruch 1, **gekennzeichnet durch** eine Gesamtdicke von nicht mehr als 500 µm.

3. Klebeband nach einem der vorangehenden Ansprüche, **dadurch gekennzeichnet, dass**
eine oder beide außen liegenden Klebemassenschichten schwarz eingefärbt sind.

4. Klebeband nach Anspruch 3, **dadurch gekennzeichnet, dass** die Einfärbung zumindest einer der schwarz eingefärbten Schichten mittels nicht leitfähiger Farbmittel bewirkt wird.

5. Klebeband nach einem der Ansprüche 3 oder 4, **dadurch gekennzeichnet, dass** die Einfärbung zumindest einer der schwarz eingefärbten Schichten mittels organischer Farbmittel bewirkt wird.

6. Stanzprodukte aus einem doppelseitigen Klebeband nach einem der vorangehenden Ansprüche.

7. Verwendung eines Klebebandes nach einem der Ansprüche 1 bis 5 oder eines Stanzproduktes nach Anspruch 6 zur Verklebung elektronischer Bauteile, insbesondere zur Verklebung im Bereich der Flüssigkristall-Datenanzeigen.

## Claims

1. Double-sided adhesive tape for bonding electronic components, consisting of two outer adhesive layers,
a carrier layer comprising a foamed polymer material,
a carrier layer laminated together with the foamed carrier layer by means of a laminating adhesive or a laminating adhesive tape, in the form of a film of a polymer material,
and also a liner with a release agent on at least one of the adhesive layers,
wherein
the foam carrier layer has a thickness of not more than 400 µm
and the film carrier layer has a thickness of not more than 40 µm,
**characterized in that**
both the foam carrier layer and the film carrier layer are coloured black.

2. Adhesive tape according to Claim 1, **characterized by** a total thickness of not more than 500 µm.

3. Adhesive tape according to any of the preceding claims, **characterized in that** one or both outer adhesive layers are coloured black.

4. Adhesive tape according to Claim 3, **characterized in that** the colouring of at least one of the black-coloured layers is brought about by means of nonconductive colorants.

5. Adhesive tape according to either of Claims 3 and 4, **characterized in that** the colouring of at least one of the black-coloured layers is brought about by means of organic colorants.

6. Punched products comprising a double-sided adhesive tape according to any of the preceding claims.

7. Use of an adhesive tape according to any of Claims 1 to 5 or of a punched product according to Claim 6 for bonding electronic components, especially for bonding in the area of liquid-crystal displays.

## Revendications

1. Ruban adhésif double face pour coller des composants électroniques, constitué
de deux couches extérieures de masse adhésive,
d'une couche support en un matériau polymère expansé,
d'une couche support, contrecollée à la couche support expansée à l'aide d'une masse adhésive pour stratifié ou d'un ruban adhésif pour stratifié, sous forme d'une feuille en un matériau polymère,
ainsi que d'un recouvrement, comportant un matériau antiadhésif, sur au moins l'une des couches de masse adhésive,
dans lequel
la couche support expansée présente une épaisseur non supérieure à 400 µm,
et la couche support en forme de feuille présente une épaisseur non supérieure à 40 µm,
**caractérisé en ce que** tant la couche support expansée que la couche support en forme de feuille sont colorées en noir dans la masse.

2. Ruban adhésif selon la revendication 1, **caractérisé par** une épaisseur totale non supérieure à 500 µm.

3. Ruban adhésif selon l'une des revendications précédentes, **caractérisé en ce que** l'une des couches extérieures de masse adhésive, ou les deux, sont colorées en noir dans la masse.

4. Ruban adhésif selon la revendication 3, **caractérisé en ce que** la coloration dans la masse d'au moins l'une des couches colorées en noir dans la masse est réalisée à l'aide d'un colorant non conducteur.

5. Ruban adhésif selon l'une des revendications 3 ou 4, **caractérisé en ce que** la coloration dans la masse d'au moins l'une des couches colorées en noir dans la masse est réalisée à l'aide de colorants organiques.

6. Produits découpés à partir d'un ruban adhésif double face selon l'une des revendications précédentes.

7. Utilisation d'un ruban adhésif selon l'une des revendications 1 à 5 ou d'un produit découpé selon la revendication 6 pour coller des composants électroniques, en particulier pour un collage dans le domaine des affichages de données à cristaux liquides.
